# EUROPEAN PATENT SPECIFICATION

(11) **EP 4 101 272 B1**
(45) Date of publication and mention of the grant of the patent: **30.10.2024**
(21) Application number: 22177522.4
(22) Date of filing: 07.06.2022
(51) Int. Cl.: A01B 23/02, A01B 35/14

(54) **DIGGING ATTACHMENT FOR SOWING LINE**
GRABEVORRICHTUNG FÜR PFLANZLINIE
ACCESSOIRE DE CREUSEMENT POUR LIGNE DE PLANTATION

(30) Priority: 08.06.2021 PT 2021117274
(43) Date of publication of application: 14.12.2022
(73) Proprietor: Fravizel - Equipamentos Metalomecânicos SA, 2025-999 Alcanede (PT)
(72) Inventor: VICENTE FRAZAO, ELISEU MANUEL, 2025-161 Alcanede (PT)
(74) Representative: do Nascimento Gomes, Rui

(56) References cited:
- EP-A1- 2 048 469
- CN-A- 102 296 653
- US-A- 4 271 614
- US-A1- 2002 095 924
- US-A1- 2009 188 684
- US-A1- 2013 161 035
- US-A1- 2020 240 108

## Description

### TECHNICAL FIELD OF THE INVENTION

The present invention falls within the area of accessories for forestry and agricultural exploitation, concerning in particular to an accessory for excavating machines, even more in particular an accessory for excavating machines for preparing land for planting trees and the like, even more in particular a dig accessory for planting line.

### STATE OF THE ART OF THE INVENTION

Subsoilers are accessories that can be coupled to an agricultural machine, such as a tractor, and have the purpose of decompacting and aerating the soil for cultivation or for planting seeds, trees, etc. In order to perform this function, these accessories have rods in their constitution, designated throughout this document as tines. The function of these tines is to penetrate the soil in order to decompact it, i.e., fragment it, so that it is possible to place whatever you want to plant.

The problem with these accessories is that they only stir up the soil, which is not enough for most of what you want to plant, as they require you to dig the soil afterwards so that you can plant. For example, for the plantation of trees, more specifically eucalyptus, it is necessary to prepare the site beforehand. The use of the excavator bucket is often necessary to dig and prepare the land, although this practice disturbs the ecosystem, in terms of environmental protection, because it can cause soil erosion in that place.

US4271614 A discloses a tool for fracturing soil to be excavated. A blade is pivotally attached to the scoop or bucket of an excavating machine. Teeth-like soil penetrating devices are added to the blade.

US2020240108 A1 discloses a subsoil tool for ameliorating soil compaction having a shank attached to a tool bar of a tractor, wings on forward wing links pivotally engaged to the shank, and following wings on a wing rod pivotally engaged with the forward wing link.

### TECHNICAL PROBLEMS SOLVED BY THE INVENTION

The present solution solves this problem since it doesn't just stir up the soil, fragmenting it, but penetrates in the soil, which allows not only the placement of what you want to plant, but also to promote the penetration of water into the soil, promoting a better and more efficient infiltration of rainwater and moisture, being these two advantages achieved through at least two tines (2). Besides these two advantages, the present invention also allows the creation of the necessary opening in the land for planting, as it has a blade (4) between every two tines (2), which is totally stuck into the soil through the vertical downward movement of the machine, simultaneous to the penetration of the tines (2) and, with the horizontal movement (in progress) of the machine, the "hole"/opening is achieved, i.e., the digging to receive for example a tree, and then the vertical upward movement, so that the desired diggings are performed.

### SUMMARY OF THE INVENTION

The present invention relates to a dig accessory (1) for excavating machines for preparing land for a planting line according to claim 1. Optional features are set out in the dependent claims. The dig accessory not only stirs up the soil, fragmenting it, but also penetrates in it through the tines (2), connected by a tube (6), allowing not only the placement of what you want to plant, but also promoting the penetration of water into the soil, promoting a better and more efficient infiltration of rainwater and moisture. The present invention also allows the creation of the necessary opening in the land for planting, as it has a blade (4) between every two tines (2), fixed by a support (3), which is totally stuck into the soil through the vertical downward movement of the machine, simultaneous to the penetration of the tines (2) and, with the horizontal movement (in progress) of the machine, the "hole" is achieved, i.e., the digging to receive for example a tree, and then the vertical upward movement, so that the desired diggings are performed. It can also have removable wear sleeves (5) at its ends, allowing its replacement.

### DESCRIPTION OF THE FIGURES

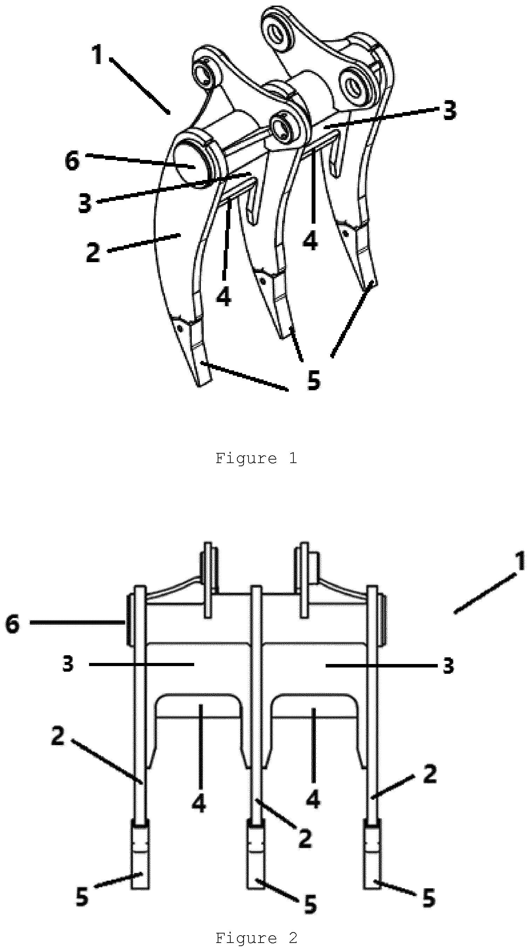

Figure 1 - perspective representation of the accessory (1) in which we can see the tines (2), connected by a tube (6), in this configuration we have three tines (2), so between every two tines (2) we can see a blade (4) fixed by a support (3), and we can also see the wear sleeves (5) .
Figure 2 - front view representation of the accessory (1) in which we can see the tines (2), connected by a tube (6), in this configuration we have three tines (2), so between every two tines (2) we can see a blade (4) fixed by a support (3), and we can also see the wear sleeves (5) .

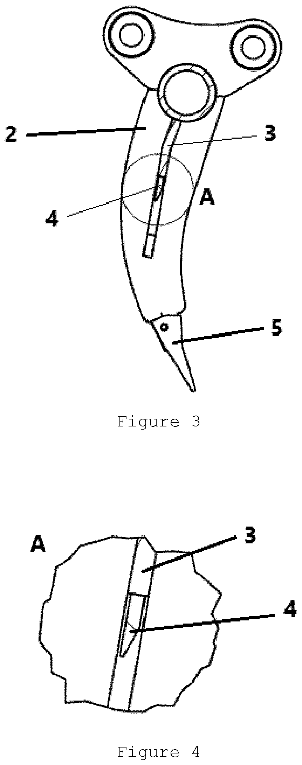

Figures 3 and 4 - detail view A of the support assembly (3) and the blade (4).

### DETAILED DESCRIPTION OF THE INVENTION

It is therefore an object of this invention a dig accessory for planting line with the purpose of opening the soil for the planting of trees.

According to the present invention, a blade (4) is applied between every two tines (2). A blade (4) is thus arranged between every two tines (2). Each blade (4) is coupled to a support (3).

This accessory (1) has means for engagement in any agricultural machine or is installed in an excavating machine or the like, well known in this area. The accessory (1) comprises at least two tines (2) for penetrating the soil, these tines (2) being connected with each other by means of a tube (6) or the like.

The accessory (1) further has a support (3), such that between every two tines (2) a blade (4) is applied, which is mechanically joined to the tines (2) and to the support (3), for example by welding or other attaching methods. The vertical upward and downward movement of the blade(s) (4) and the tine(s) (2) is therefore solidary.

In a preferred embodiment, the blade (4) is chamfered and/or straight or toothed.

In a preferred embodiment, the teeth (2) are 500-1500 mm high, so that an effective infiltration of rainwater and moisture is possible, and even irrigation if this is the source of hydration.

In a preferred embodiment, the tines (2) have a distance between them of 500-1500 mm, so that it is possible to plant the trees in parallel, and in a systematic, automatic, and standard manner.

In a preferred embodiment, the distance between the lower end of the tine (2) and the blade (4) is between 400 and 1300 mm, so that it is possible to execute a hole able to receive the plantation of a tree.

In a preferred embodiment, the tines (2) have removable wear sleeves (5) at their ends, allowing the replacement of the last ones rather than the whole piece, i.e., the tine (2), which greatly reduces the maintenance cost of the accessory (1).

## Claims

1. A dig accessory (1) for excavating machines for preparing land for a planting line wherein the accessory (1) comprises at least two tines (2) for penetrating the soil, these tines (2) being connected with each other; at least one blade (4), and a support (3) of the blade (4), such that a blade (4) is applied between every two tines (2)
wherein each blade (4), set of two tines (2) and support (3) are arranged such that, when provided a vertical downward movement of a machine coupled to the accessory, each blade (4) is able to be totally stuck into the soil, simultaneously with a penetration of the tines (2) into the soil, and wherein
the tines (2) are connected by a tube (6),
the dig accessory being **characterised in that** the blade (4) is mechanically joined to the tines (2) and to the support (3).

2. Accessory (1) according to claim 1, **characterized in that** the blade (4) is mechanically joined to the tines (2) and to the support (3) through welding or other attaching methods.

3. Accessory (1) according to any of the preceding claims, **characterized in that** the blade (4) is chamfered and/or straight or toothed.

4. Accessory (1) according to any of the preceding claims, **characterized in that** the tines (2) are 500-1500 mm high.

5. Accessory (1) according to any of the preceding claims, **characterized in that** the tines (2) have a distance between them of 500-1500 mm.

6. Accessory (1) according to any of the preceding claims, **characterized in that** the distance between the lower end of the tine (2) and the blade (4) is between 400 and 1300 mm.

7. Accessory (1) according to any of the preceding claims, **characterized in that** the tines (2) have removable wear sleeves (5) at their ends.

## Patentansprüche

1. Grabzubehör (1) für Aushubmaschinen zur Vorbereitung von Land für eine Pflanzlinie, wobei das Zubehör (1) mindestens zwei Zinken (2) zum Eindringen in den Boden umfasst, wobei diese Zinken (2) miteinander verbunden sind;
mindestens eine Schaufel (4) und einen Träger (3) für die Schaufel (4), so dass zwischen jeweils zwei Zinken (2) eine Schaufel (4) angebracht ist
wobei jede Schaufel (4), der Satz von zwei Zinken (2) und der Träger (3) so angeordnet sind, dass bei einer vertikalen Abwärtsbewegung einer mit dem Zubehör gekoppelten Maschine jede Schaufel (4) gleichzeitig mit dem Eindringen der Zinken (2) in den Boden vollständig in den Boden gesteckt werden kann, und wobei
die Zinken (2) sind durch ein Rohr (6) verbunden, wobei das Grabzubehör **dadurch gekennzeichnet ist, dass** die Schaufel (4) mechanisch mit den Zinken (2) und dem Träger (3) verbunden ist.

2. Zubehör (1) nach Anspruch 1, **dadurch gekennzeichnet, dass** die Schaufel (4) mit den Zinken (2) und dem Träger (3) durch Schweißen oder andere Befestigungsmethoden mechanisch verbunden ist.

3. Zubehör (1) gemäß einem der vorhergehenden Ansprüche, **dadurch gekennzeichnet, dass** die Schaufel (4) abgeschrägt und/oder gerade oder gezahnt ist.

4. Zubehör (1) nach einem der vorhergehenden Ansprüche, **dadurch gekennzeichnet, dass** die Zinken (2) 500-1500 mm hoch sind.

5. Zubehör (1) nach einem der vorhergehenden Ansprüche, **dadurch gekennzeichnet, dass** die Zinken (2) einen Abstand zwischen ihnen von 500-1500 mm aufweisen.

6. Zubehör (1) nach einem der vorhergehenden Ansprüche, **dadurch gekennzeichnet, dass** der Abstand zwischen dem unteren Ende des Zinkens (2) und der Schaufel (4) zwischen 400 und 1300 mm beträgt.

7. Zubehör (1) nach einem der vorhergehenden Ansprüche, **dadurch gekennzeichnet, dass** die Zinken (2) an ihren Enden abnehmbare Verschleißhülsen (5) aufweisen.

## Revendications

1. Accessoire de creusage (1) pour machines d'excavation destinées à préparer le terrain pour une ligne de plantation, où l'accessoire (1) comprend au moins deux dents (2) pour pénétrer dans le sol, ces dents (2) étant reliées l'une à l'autre ;
au moins une lame (4), et un support (3) de la lame (4), de sorte qu'une lame (4) est appliquée entre chaque deux dents (2)
dans lequel chaque lame (4), ensemble de deux dents (2) et support (3) sont disposés de manière à ce que, lors d'un mouvement vertical vers le bas d'une machine couplée à l'accessoire, chaque lame (4) puisse être totalement enfoncée dans le sol, simultanément à une pénétration des dents (2) dans le sol, et dans lequel les dents (2) sont reliées par un tube (6), l'accessoire de creusage étant **caractérisé en ce que** que la lame (4) est reliée mécaniquement aux dents (2) et au support (3).

2. Accessoire (1) selon la revendication 1, **caractérisé en ce que** la lame (4) est reliée mécaniquement aux dents (2) et au support (3) par soudage ou par d'autres méthodes de fixation.

3. Accessoire (1) selon l'une quelconque des revendications précédentes, **caractérisé en ce que** la lame (4) est chanfreinée et/ou droite ou dentée.

4. Accessoire (1) selon l'une quelconque des revendications précédentes, **caractérisé en ce que** les dents (2) ont une hauteur de 500 à 1500 mm.

5. Accessoire (1) selon l'une quelconque des revendications précédentes, **caractérisé en ce que** les dents (2) ont une distance entre elles de 500 à 1500 mm.

6. Accessoire (1) selon l'une quelconque des revendications précédentes, **caractérisé en ce que** la distance entre l'extrémité inférieure de la dent (2) et la lame (4) est comprise entre 400 et 1300 mm.

7. Accessoire (1) selon l'une quelconque des revendications précédentes, **caractérisé en ce que** les dents (2) ont des manchons d'usure amovibles (5) à leurs extrémités.
